# EUROPÄISCHE PATENTSCHRIFT

(11) **EP 0 573 395 B1**
(45) Veröffentlichungstag und Bekanntmachung des Hinweises auf die Patenterteilung: **27.02.2002**
(21) Anmeldenummer: 93810391.8
(22) Anmeldetag: 28.05.1993
(51) Int. Cl.: B32B 15/08, B32B 31/00, B29C 63/02

(54) **Verfahren zur Herstellung von Mehrschichtverbunden zum Schutz von empfindlichen äusseren Oberflächen**
Method of production of laminates involving protection of sensitive outer surfaces
Procédé pour la production de stratifiés protégeant les surfaces extérieures sensibles

(30) Priorität: 05.06.1992 CH 181192
(43) Veröffentlichungstag der Anmeldung: 08.12.1993
(73) Patentinhaber: Alcan Technology & Management AG, 8212 Neuhausen am Rheinfall (CH)
(72) Erfinder: Ehrat, Rainer, CH-8207 Schaffhausen (CH); Schlatter, Reinhard, CH-8200 Schaffhausen (CH)

(56) Entgegenhaltungen:
- EP-A- 0 063 395
- EP-A- 0 067 060
- EP-A- 0 150 816
- EP-A- 0 423 074
- DE-U- 8 612 789

## Beschreibung

Vorliegende Erfindung betrifft ein Verfahren zur Herstellung von Mehrschichtverbunden aus wenigstens drei Schichten mit empfindlichen äusseren Oberflächen als Deckschichten und ein Schutzverfahren für die empfindlichen Oberflächen gegen mechanische und physikalische Einflüsse, insbesondere bei Anwendung von Druck- und/oder Hitzeeinwirkung zum trennfesten Verbinden und zur Bildung eines Verbundes, wobei die empfindlichen Oberflächen vor oder während der Druck- und/oder Hitzeeinwirkung mit einer Schutzschicht bedeckt werden.

Es ist beispielsweise aus der EP 0 423 074 bekannt, Mehrschichtverbunde aus einer Kernschicht aus thermoplastischem Material und beiderseitigen Deckschichten aus Metall herzustellen. Die Kernschicht und die Deckschicht werden kontinuierlich zwischen zwei Walzen bei erhöhter Temperatur verpresst und die Schichten trennfest miteinander verbunden. Der Verbund kann mit einer Schutzfolie beschichtet werden.

Die Druckschrift DE-U-8612789 beschreibt eine abziehbare Schutzfolie aus biaxial streckorientiertem und hitzefixiertem Polypropylen mit einer Kaltsiegelschicht auf der einen Seite. Die Schutzfolie wird bei Raumtemperatur mit der Siegelschicht auf die zu schützende Oberfläche gelegt und angedrückt, wobei eine rückstandsfrei ablösbare Verbindung entsteht. Das Andrücken der Schutzfolie bei erhöhten Temperaturen bis 50° C führt zu einer festhaftenderen Verbindung zu der schützenden Oberfläche.

Es kann sinnvoll sein, die Schutzfolie, welche die Endprodukte bis zu deren endgültigen Verarbeitung schützen sollen, in einem Arbeitsgang mit dem Laminierprozess auf die äusseren Oberflächen des Verbundes aufzubringen.

Bei der Verarbeitung der Schichten zum Verbund sind die, gegebenenfalls lackierten, polymerbeschichteten, veredelten etc., Oberflächen der Deckschichten aus Kunststoff oder Metall durch die Druck- und Hitzeeinwirkung hohen Beanspruchungen ausgesetzt. Schutzfolien vermögen nicht regelmässig die schädlichen Einflüsse von den Oberflächen fernhalten. Es können Verfärbungen der Oberflächen resultieren oder durch mechanische Einflüsse können die Oberflächen beschädigt werden.

Aufgabe vorliegender Erfindung ist es, ein Verfahren vorzuschlagen, dass es ermöglicht, die Verbindung der einzelnen Schichten durch die freie Wahl der Druck- und Hitzeparameter optimal zu führen, ohne dass die äusseren Oberflächen der Deckschichten in Mitleidenschaft gezogen werden.

Erfindungsgemäss wird dies dadurch erreicht, dass die Schutzschicht ein bei Druck- und Hitzeeinwirkung schmelzflüssiger, plastischer oder elastischer Überzug aus einem thermoplastischen oder elastischen Kunststoff ist und die Schutzschicht bei Raumtemperatur und ohne Druckanwendung in Form einer von der Oberfläche ablösbaren Kunststoff-Folie vorliegt und die Schutzschicht in Form einer Folie auf die empfindliche Oberfläche aufgebracht wird und das Schubmodul der Schutzschicht, ermittelt im Torsionsschwingungsversuch nach DIN 53445, in welchem die Temperaturabhängigkeit des Schubmoduls ermittelt und in Pa x 10⁸ ausgedrückt wird, unterhalb einer asymptotisch verlaufenden Kurve Q liegt, die durch die Punkte Schubmodul
A: 0,7 Pa x 10⁸ bei 10° C,
B: 0,5 Pa x 10⁸ bei 30° C,
C: 0,3 Pa x 10⁸ bei 50° C,
D: 0,1 Pa x 10⁸ bei 100° C
und asymptotisch gegen 0 abfallend bei über 150° C gekennzeichnet ist, oder die Schutzschicht aus einem Elastomer mit einer Härte bei 100 - 250° C von unter 60 Shore A ist, und die Schutzschicht eine niedrigere Formbeständigkeit als die zu schützende Oberfläche aufweist.

Wenigstens in kaltem Zustande, d.h. bei Raumtemperatur, und ohne Druckanwendung, d.h. bei Normaldruck, liegt die Schutzschicht zweckmässig in Form einer Kunststoff-Folie vor.

Zur Durchführung des Verfahrens des Verbindens von verschiedenen Schichten zu einem Mehrfachverbund können beispielsweise Pressverfahren zwischen Pressplatten oder das Pressen zwischen Walzen und/oder Bändern vorgesehen werden. Zweckmässig sind Bandpressen.

Das vorliegende erfindungsgemässe Verfahren hat z.B. beim Bandpressen den Vorteil, dass durch die Ausbildung einer viskosen bis viskoelastischen Filmes, der eine Gleitfähigkeit zwischen Pressband und einlaufenden Deckschichten erzeugt, die einlaufenden Deckschichten sich leicht ausrichten lassen und spannungsfrei durch die Bandpresse laufen können.

Mehrschichtverbunde können beispielsweise eine Kernschicht aus organischen Materialien enthalten. Die Kernschicht kann z.B. eine Kernmischung, enthaltend Füllstoffe, Leichtzuschlagstoffe, Bindemittel, Flammhemmittel und/oder Verarbeitungshilfsmittel etc. enthalten. Ein oder beidseitig der Kernschicht können Deckschichten angeordnet werden.

Als organische Materialien können beispielsweise Kunststoffe, wie Thermoplaste, Duroplaste oder Elastomere angewendet werden. Die genannten Kunststoffe können gegebenenfalls auch geschäumt sein und/oder Verstärkungsmaterialien, wie Fasern, Gewebe oder Gewirke aus Glas, Kohlenstoff, organischen, natürlichen oder synthetischen Materialien enthalten. Beispiele geeigneter Thermoplaste sind Polyolefine, wie Polyethylene oder Polyvinylverbindungen, wie PVC.

Als Füllstoff der Kernmischung, welcher beispielsweise 60 - 95 Gew.-% ausmacht, eignen sich beispielsweise anorganische Verbindungen, die zweckmässig feuerhemmend und/oder schüttfähig sind, wie solche der Reihe Aluminiumtrihydroxid, Mg(OH)₂, CaCO₃ oder Magnesiumcarbonathydrat, welche beim Erwärmen chemisch gebundenes Wasser und/oder Kohlendioxid abspalten, oder z.B. für chlorhaltige Kunststoffe Antimonoxid.

Als Bindemittel, dessen Anteil an der Kernmischung vorzugsweise 5 - 40 Gew.-% beträgt, kann organischer oder anorganischer Natur sein. Als organische Bindemittel können sowohl Duroplaste als auch Thermoplaste verwendet werden. Duroplaste sind nach der Aushärtung sprödhart oder elastisch, Thermoplaste verändern nach der Verarbeitung die Elastizität nicht. Als duroplastische Bindemittel werden vorzugsweise Phenol-, Polyurethan- oder Polyisocyanuratharze eingesetzt, welche eine niedrige Brennbarkeit und Rauchentwicklung haben. Beim Einsatz von thermoplastischen Bindemitteln werden Polyolefine, wie Polyethylene, bevorzugt.

Als anorganische Bindemittel können Phosphate, Zemente, Portlandzemente, Calciumaluminate, Gips, Alkalisilikate usw. eingesetzt werden.

Leichtzuschlagstoffe sind z.B. Lavaschlacken, Bims, Zuschläge von Ton, Tonschiefer, Flugasche, Müll, die z.B. nass zu Granalien verarbeitet und durch Verdampfen des Wassers gebläht werden, Blähton, Hohlkugelkorund, Steinkohlenschlacke, Ziegelsplitt, Vermiculite, Perlite, Blähglimmer, Blähperlit, Kieselgur, Schaumsand, Schaumkies, Glashohlkugeln, Schaumglas usw.

Die Deckschichten sind in der Regel Deckschichten aus Metall in einer Dicke von 0,05 bis 4 mm. Die Deckschichten aus Metall können aus Folien, Bändern oder Platten gefertigt und je nach Pressverfahren als Endlosmaterial oder in Abschnitten verwendet werden. Als Metall können Eisen- und Nichteisenmetalle Verwendung finden. Beispielsweise können Folien, Bänder oder Platten aus Eisen, verzinktem Eisen, Stahl, Zink, Zinn, Kupfer, Bronze, Aluminium, Aluminiumlegierungen usw. eingesetzt werden.

Die Deckschichten aus Metall können mit dekorativen Schichten und/oder Veredelungsschichten, gegebenenfalls mit spezieller Oberflächenstruktur, Textur, Topografie usw., versehen sein. Die dekorativen Schichten können beispielsweise Lackierungen, bedruckte, gefärbte oder geprägte Folien aus Kunststoffen oder aus cellulosehaltigen Materialien und Verbunden sein. Veredelungsschichten können beispielsweise anodisierte, aufgedampfte, gesputterte oder im Plasma-, Flammspritz- oder Elektronenstrahlverfahren aufgebrachte Schichten, wie keramische oder anderweitig anorganische Schichten sein. Auch dekorative Metallfolien z.B. für Spiegeleffekte können angewendet werden.

Es können auch Deckschichten aus Polymeren wie PVC, Polyolefinen, Polyacrylaten, Phenoplasten, Melaminharzen etc. unverstärkt oder mit Fasern aus Glas, Polymeren oder mit Naturprodukten verstärkt, mit oder ohne Oberflächenstrukturen und Kernschichten zu Mehrfachverbunden verarbeitet werden. Es ist auch möglich, auf jeder Seite des Mehrfachverbundes eine verschiedene Deckschicht vorzusehen.

Es ist Aufgabe vorliegender Erfindung, die äusseren, d.h. sichtbaren, Seiten der Deckschichten, die Teil des Mehrschichtverbundes darstellen, zu schützen.

Es können auch Mehrschichtverbunde, enthaltend beispielsweise als Kern eine mittlere Schicht aus Metall oder Kunststoff, in Band- oder Folienform oder aus Papier, Pappe oder dergleichen, und beidseitig der mittleren Schicht je eine Kernschicht und auf diesen Kernschichten schliesslich Deckschichten, z.B. aus Metall, gefertigt werden.

Weitere Varianten sind möglich, so zum Beispiel enthaltend als Kernschichten geschäumte Schichten aus organischem Material.

Der Schichtaufbau zwischen den Deckschichten kann sich nach den Erfordernissen der Praxis richten und entsprechend sind mehrschichtige Kerne denkbar.

Die Schichten unter sich können selbsthaftend, insbesondere unter der Anwendung von Druck und/oder Temperatur sein. Zwischen den einzelnen oder allen Schichten können Bindemittel vorgesehen werden. Solche Bindemittel können Kunststoff-Folien, wie Siegelfolien, Klebebänder oder dergleichen sein. Andere Bindemittel sind Klebstoffe, die aufgesprüht oder aufgestrichen werden. Mittels dieser selbsthaftenden Schichten oder der Bindemittel können die einzelnen Schichten untereinander trennfest verbunden werden.

Ein Beispiel eines Verfahrens zur Herstellung eines Verbundes ist in der EP 0 423 074 beschrieben.

Die Überzüge, die im erfindungsgemässen Verfahren angewendet werden, liegen zweckmässig bei Drücken von 1 bis 50 bar und bei Temperaturen von 100 bis 250 °C in schmelzflüssigem, plastischem oder elastischem Zustand vor.

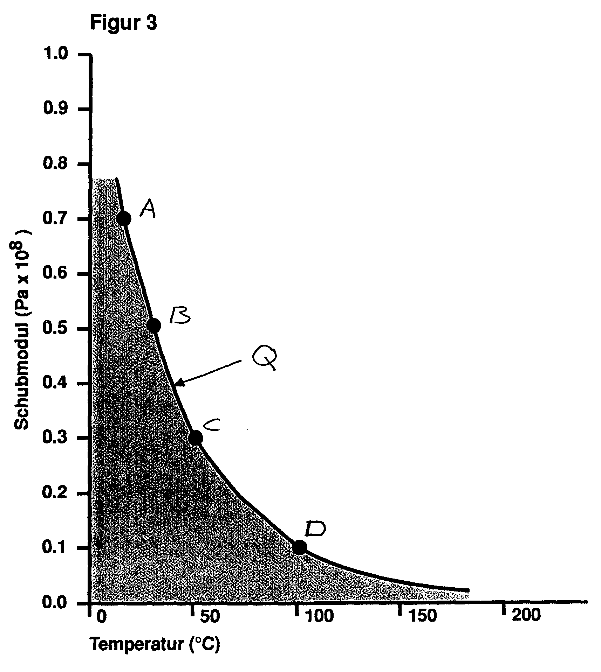

Figur 3 stellt ein erfindungsgemässes Schubmodul gegen die Temperatur aufgezeichnet dar. Schutzschichten, deren Schubmodul im schraffierten Bereich liegen, können bevorzugt angewendet werden.

Bevorzugt sind Überzüge aus Elastomeren mit einer Härte bei 100 bis 250 °C zwischen 10 bis 30 Shore A.

Die Dicke der Überzüge in Folienform kann beispielsweise von 10 µm bis 250 µm, und vorteilhaft von 12 µm bis 100 µm betragen.

Die Überzüge können aus einem thermoplastischen Kunststoff der Reihe der Polyolefine , der Polyacrylate, der Polyester, der Polymere der Vinylverbindungenmit oder ohne Weichmacher-Zusatz, oder aus elastomeren Kunststoffen bestehen oder diese Kunststoffe enthalten.

Beispiele für die Überzüge und insbesondere Überzüge aus der Reihe der Polyolefine sind Polyethylen, z.B. Polyethylen hoher Dichte (HDPE, Dichte grösser als 0,944g/cm³), Polyethylen mittlerer Dichte (MDPE, Dichte 0,926-0,940 g/cm³), lineares Polyethylen mittlerer Dichte (LMDPE, Dichte 0,926-0,940 g/cm³), Polyethylen niedriger Dichte (LDPE, Dichte 0,910-0,925 g/cm³) und lineares Polyethylen niedriger Dichte (LLDPE, Dichte 0,916-0,925 g/cm³), Polypropylen, ataktisches, isotaktisches, amorphes und kristallines Polypropylen, sowie beliebige Mischungen davon, Poly-1-buten, Poly-3-methylbuten, Poly-4-methyl-penten und Copolymere davon, wie z.B. von Polyethylen mit Vinylacetat, Vinylacetat und Acrylestern, Vinylalkohol, Acrylsäure, z.B. Ionomerharze, wie Copolymerisate von Ethylen mit etwa 11 % Acrylsäure, Methacrylsäure, Acrylestern, Methacrylestern, Tetrafluorethylen oder Polypropylen, sowie statistische Copolymere, Block-Copolymere oder Olefinpolymer-Elastomer-Mischungen. Polyethylene und Polypropylen werden bevorzugt.

Thermoplaste der Reihe der Polyester sind beispielsweise Polyalkylenterephthalate oder Polyalkylenisophthalate mit Alkylengruppen oder -resten mit 2 bis 10 Kohlenstoffatomen oder Alkylengruppen mit 2 bis 10 C-Atomen, die wenigstens durch ein -0- unterbrochen sind, wie z.B. Polyethylenterephthalat, Polypropylenterephthalat, Polybutylenterephthalat (Polytetramethylenterephthalat), Polydecamethylenterephthalat, Poly-1,4-cyclohexyldimethylolterephthalat oder Polyethylen-2,6- naphthalen-dicarboxylat oder Polyalkylenterephthalat- und Polyalkylenisophthalat-Mischpolymere, wobei der Anteil an Isophthalat z.B. 1 bis 10 Mol-% beträgt, Mischpolymere und Terpolymere, sowie Blockpolymere und gepfropfte Modifikationen oben genannter Stoffe.

Zweckmässig sind die Thermoplaste auf Ester-Basis Polylalkylenterephthalate mit Alkylengruppen oder -resten mit 2 bis 10 Kohlenstoffatomen und Polylakylenterephthalate, mit Alkylengruppen oder -resten mit 2 bis 10 Kohlenstoffatomen, die durch ein oder zwei -0- unterbrochen sind.

Bevorzugt sind als Thermoplaste auf Ester-Basis Polylalkylenterephthalate mit Alkylengruppen oder -resten mit 2 bis 4 Kohlenstoffatomen und ganz besonders bevorzugt sind Polyethylenterephthalalte.
Als Beispiele von Kunststoffen aus der Reihe der Polymere der Vinylverbindungen können beispielsweise Polyvinylester, Polyvinylalkohole, Polyvinylacetale, Polyvinylether oder Polymerisate von N-Vinyllactamen und Vinylaminen oder halogenhaltige Vinyl-Polymere genannt werden.

Beispiele von Polyvinylestern sind Polyvinylacetat-Homopolymerisate und Vinylacetat-Copolymerisate, wie Vinylacetat/Dibutylmaleinat, Vinylacetat/n-Butylacrylat, Vinylacetat/2-Ethylhexylacrylat, Vinylacetat/ n-Butylacrylat/N-Hydroxymethylacrylamid, Vinylacetat/Veova-10, Vinylacetat/Ethylen oder Vinylacetat/Vinyllaurat, Vinylpropionat-Homopolymerisate und Vinylpropionat-Copolymere, wie Vinylpropionat/tert-Butylacrylat-Copolymere.

Beispiele von Polyvinylalkoholen sind vollverseifte Typen bis zu Produkten mit Hydrolysegraden von etwa 70%, Verseifungsprodukte von Vinylacetat/Ethylen-Copolymerisaten usw.

Beispiele von Polyvinylacetalen sind Polyvinylformal und Polyvinylbutyral.

Beispiele von Polyvinylethern sind Homopolymere von Methyl-, Ethyl-, Isobutyl-, Decalyl- und Octadecylvinylether und Copolymere z.B. aus Vinylethern und Maleinsäureanhydrid.

Beispiele von Polymerisaten von N-Vinyllactamen und Vinylaminen sind Polyvinylpyrrolidon und Polymerisate von N-Vinylpiperidon und N-Vinylcaprolactam.

Beispiele von Polyvinylaminen sind Polymerisate des N-Vinylcarbazols und des Polyvinylimidazols.

Beispiele von elastischen Kunststoffen oder Elastomeren sind Mischpolymerisate oder Copolymerisate bzw. Pfropfpolymerisate, die Anteile an Dien-, Urethan-, Acrylat-, Siloxan-, Epichlorhydrin-, Isobutylen-, Butadien-, Isopren- oder Chloropren-Verbindungen enthalten.

Die Überzüge werden in Folienform angewendet. Die Kunststoffe können auf an sich bekannte Weise zu Folien verarbeitet werden.

Die Folien werden schrittweise oder bevorzugt kontinuierlich auf die zu schützende Oberfläche gebracht. In einem kontinuierlichen Verfahren kann der Überzug an einem beliebigen Ort bezüglich des maschinellen Vorganges vor dem Pressvorgang auf die zu schützende metallische Oberfläche aufgebracht werden. Die zu schützende Oberfläche kann mit einem Kleber oder Haftvermittler vorbehandelt sein und/oder die Überzugsfolie kann mit einem Kleber oder Haftvermittler vorbehandelt werden. Die Vorbehandlung kann durch aufsprühen, aufrakeln, aufpinseln usw. des Klebers und Haftvermittlers erfolgen. Ein Kleber oder Haftvermittler kann auch unmittelbar vor dem Beschichtungsvorgang zwischen die einlaufenden Deckschichten-Bänder und Überzugsfolie gesprüht werden.

Geeignete Kleber oder Haftvermittler sind z.B. Kautschuk oder Acryl-Haftkleber auf der Basis von Polychloropren, Styrol-Butadien, Nitril, Polyacrylat, Polymethylacrylat, Acrylester, Polyvinylether oder Polyisobuten, die in organischen Lösungsmitteln mit Zusätzen von Phenolharzen, Kohlenwasserstoffharzen oder Kolophonium-.Harz gelöst, oder im Wasser dispergiert werden. Nach dem Auftragen der Kleber oder Haftvermittler in dünner Schicht kann die flüssige Phase entfernt werden.

Bevorzugt sind Verfahren nach vorliegender Erfindung, bei denen die Schutzschichten aus einer Folie enthaltend Polyolefine oder Polyester und einer Klebstoffschicht, wobei Beispiele für solche Werkstoffe oben angegeben sind, bestehen.

Während des Vorganges des Verbindens der Schichten zu einem Mehrfachverbund in einer Pressvorrichtung, z.B. einer Bandpresse, wird die zwischen der zu schützenden Oberfläche und dem Stempel, z.B. dem Pressband, liegende Schutzschicht, mit Druck beaufschlagt und in der Regel einem Temperaturprofil aus Aufheizen und Abkühlen ausgesetzt. Dabei formt sich die Schutzschicht der zu schützenden Oberfläche an und schützt die Oberfläche vor z.B. Druckspitzen durch Unebenheiten der Pressvorrichtung oder der Verbundlagen, Veränderung von Oberflächentextur oder Topographie, eindringender Luft, die beispielsweise metallische Oberflächen zu oxidieren vermag. Unebenheiten, mechanische Beschädigungen im Pressstempel, resp. Pressband, oder Fremdteile, wie Verunreinigungen, die sich durch die Druckwirkung auf die zu schützende Oberfläche übertragen könnten, werden durch die Schutzschicht wirksam abgefangen.

Die Schutzschicht oder Teile davon erreichen durch die Hitzeeinwirkung und/oder unter Druck einen schmelzflüsssigen, plastischen oder elastischen Zustand und bilden dadurch eine Schicht sehr geringer Schubfestigkeit bzw. eine Gleitschicht mit sehr geringem Reibungskoeffizient und gutem Eindringvermögen (Verformbarkeit) für Oberflächenstrukturen, Druckspitzen und/oder Fremdpartikel aus. Dadurch werden bei besagten Druck- und/oder Temperaturprozessen Beschädigungen oder Veränderungen der zu schützenden Oberflächen durch unterschiedliche thermische Ausdehnung und/oder Reibung und/oder Fremdpartikel zwischen den Druck ausübenden Oberflächen und den zu schützenden Oberflächen verhindert.

Bevorzugt wird die Schutzschicht, respektive Schutzschichten, beidseitig des Mehrfachverbundes, in einer Bandpresse angewendet.

Nach dem Prozess des trennfesten Verbindens der einzelnen Schichten des Mehrfachverbundes, beispielsweise nach der Behandlung in einer Bandpresse, kann die Schutzschicht entfernt werden. Eine Schutzfolie kann abgezogen und gegebenenfalls aufgerollt werden. Die Schutzfolie kann beispielsweise durch Schmelzen und Extrudieren wieder zu neuer Schutzfolie oder anderweitig verwendbaren Folien verarbeitet werden. Aufgerollte Schutzfolie kann gegebenenfalls auch wieder im Kreislauf an den Anfang der Produktionslinie gebracht und auf die in die Presse einlaufenden, zu schützenden Oberflächen aufgebracht werden.

Die Schutzschicht kann auch auf den Oberflächen verbleiben und über das Herstellungsverfahren hinaus den Oberflächen temporären Schutz vermitteln.

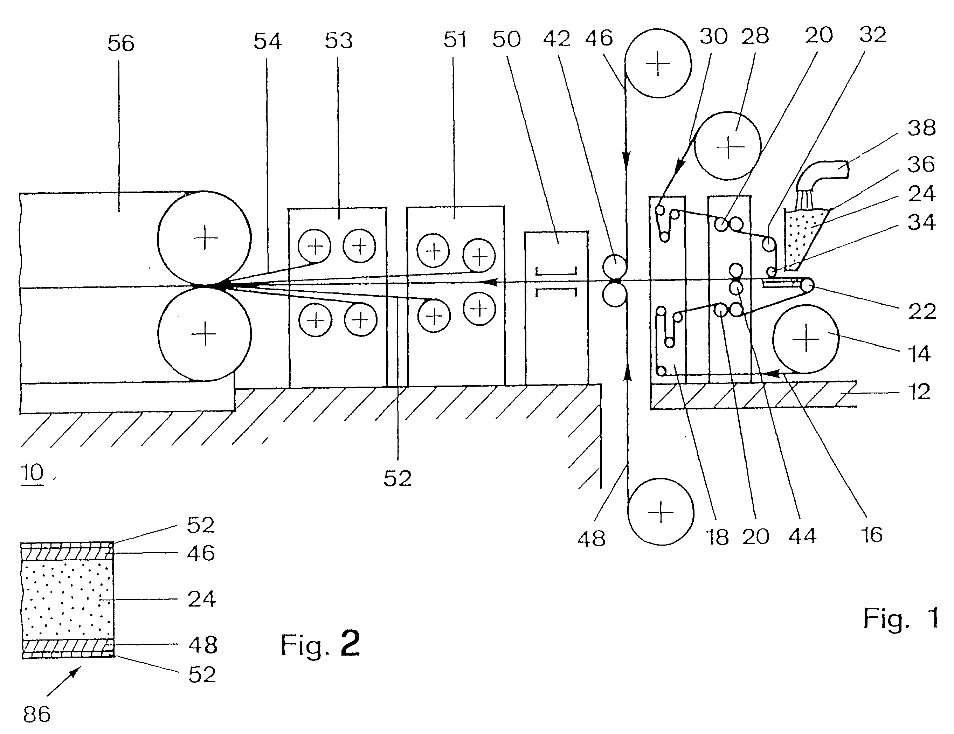

Die Figuren 1 und 2 illustrieren beispielhaft eine Anwendungsmöglichkeit des erfindungsgemässen Verfahrens. Diese zeigen in:
- Fig. 1 eine Ansicht einer Vorrichtung zur kontinuierlichen Herstellung von Verbundplatten;
- Fig. 2 einen teilweisen Querschnitt durch eine Verbundplatte.

Auf einem Fundament 10 und einer Bodenplatte 12 sind die wesentlichen Bestandteile der in Fig. 1 gezeigten Vorrichtung abgestützt.

Von einer unteren Haspel 14 wird eine untere Klebefolie 16 abgewickelt und über eine Folienzugregelung 18, eine Breitstreckwalze 20 und eine Umlenkrolle 22 in etwa horizontaler Lage in den Bereich der Zufuhr der homogenen Kernmischung 24 geführt. In diesem Bereich liegt die untere Klebefolie 16 im Betrieb gleitend auf einem Rakeltisch 26 auf.

Von einer oberen Haspel 28 wird eine obere Klebefolie 30 abgewickelt und ebenfalls über eine Folienzugregelung 18, eine Breitstreckwalze 20 und eine Umlenkrolle 32 um einen Rakelbalken 34 bzw. um ein Rakelblatt geschlungen.

Eine automatisch betätigte Dosiervorrichtung 36 entleert kontinuierlich oder in kleinen Portionen Kernmischung 24 auf die untere Klebefolie 16. Die Dosiervorrichtung 36 wird von einer Zufuhrleitung 38 gespeist.

Zwei Zugwalzen 42 ziehen die Klebefolien 16, 30 durch den Keilspalt im Bereich des Rakelbalkens 34, wobei die schüttfähige Kernmischung 24 mitgezogen und im Keilspalt erstmals verdichtet wird. Eine weitere Verdichtung erfolgt zwischen den Vorverdichtungswalzen 44.

Um die Zugwalzen 42 geschlungen sind ein oberes Deckband 46 und ein unteres Deckband 48, welche auf die Klebefolien 16, 30 mit der Kernmischung 24 gedrückt werden, wobei die Kernmischung ein weiteres Mal verdichtet wird.

Der kontinuierliche Verbund läuft vorerst durch eine Bandvorwärmung 50, dann durch ein Gerüst 51 mit Rollen einer Schutzfolie 52 und ein Gerüst 53 mit Rollen eines Papierbandes 54 zu einer Doppelbandpresse 56. Hier wird der Verbund aus der vorverdichteten Kernmischung 24, den Klebefolien 16, 30, den Deckbändern 46, 48, den Schutzfolien 52 und gegebenenfalls den Papierbändern 54 gepresst, erwärmt, auf Temperatur gehalten, abgekühlt und schliesslich, nach der Doppelbandpresse 56, auf das Endmass abgelängt.

Die Schutzfolie kann nach dem Verlassen der Bandpresse (in Figur 1 nicht mehr gezeigt), entweder auf dem Verbund als temporärer Schutz verbleiben oder die Schutzfolie kann, beispielsweise durch Abziehen vom Verbund und Aufwickeln, entfernt werden. Eine Wiederverwendung der abgezogenen Folie für gleichen oder ähnlichen Zweck ist auch möglich.

Eine in Fig. 2 teilweise dargestellte Verbundplatte 86 zeigt die mit zwei Deckbändern 46, 48 elastisch verklebte Kernschicht aus der stark verdichteten, ausgehärteten Kernmischung 24. Die Deckbänder 46, 48 sind mit Schutzfolien 52 beschichtet. Die Klebefolien sind als solche nicht mehr sichtbar.

## Patentansprüche

1. Verfahren zur Herstellung von Mehrschichtverbunden aus wenigstens drei Schichten mit empfindlichen äusseren Oberflächen als Deckschichten und ein Schutzverfahren für die empfindlichen Oberflächen gegen mechanische und physikalische Einflüsse, insbesondere bei Anwendung von Druck- und/oder Hitzeeinwirkung zum trennfesten Verbinden und zur Bildung eines Verbundes, wobei die empfindlichen Oberflächen vor oder während der Druck- und/oder Hitzeeinwirkung mit einer Schutzschicht bedeckt werden,
**dadurch gekennzeichnet, dass**
die Schutzschicht ein bei Druck- und Hitzeeinwirkung schmelzflüssiger, plastischer oder elastischer Überzug aus einem thermoplastischen oder elastischen Kunststoff ist und die Schutzschicht bei Raumtemperatur und ohne Druckanwendung in Form einer von der Oberfläche ablösbaren Kunststoff-Folie vorliegt und die Schutzschicht in Form einer Folie auf die empfindliche Oberfläche aufgebracht wird und das Schubmodul der Schutzschicht, ermittelt im Torsionsschwingungsversuch nach DIN 53445, in welchem die Temperaturabhängigkeit des Schubmoduls ermittelt und in Pa x 10⁸ ausgedrückt wird, unterhalb einer asymptotisch verlaufenden Kurve Q liegt, die durch die Punkte Schubmodul
A: 0,7 Pa x 10⁸ bei 10° C,
B: 0,5 Pa x 10⁸ bei 30° C,
C: 0,3 Pa x 10⁸ bei 50° C,
D: 0,1 Pa x 10⁸ bei 100° C
und asymptotisch gegen 0 abfallend bei über 150° C gekennzeichnet ist, oder die Schutzschicht aus einem Elastomer mit einer Härte bei 100 - 250° C von unter 60 Shore A ist, und die Schutzschicht eine niedrigere Formbeständigkeit als die zu schützende Oberfläche aufweist.

2. Verfahren nach Anspruch 1, **dadurch gekennzeichnet, dass** die Schutzschicht mittels einer Klebstoffschicht oder eines Haftvermittlers auf die empfindliche Oberfläche aufgebracht wird.

3. Verfahren nach einem der Ansprüche 1 bis 2, **dadurch gekennzeichnet, dass** die Schutzschicht aus einem Elastomer mit einer Härte bei 100 - 250° C zwischen 10 - 30 Shore A ist.

4. Verfahren nach Anspruch 1, **dadurch gekennzeichnet, dass** Die Schutzschicht bei Drücken von 1 bis 50 bar und bei Temperaturen von 100 bis 250 °C schmelzflüssig, plastisch oder elastisch vorliegt.

5. Verfahren nach Anspruch 1, **dadurch gekennzeichnet, dass** die Dicke der Schutzschicht 10 µm bis 250 µm beträgt.

6. Verfahren nach Anspruch 1, **dadurch gekennzeichnet,dass** die Schutzschicht aus einem thermoplastischen Kunststoff der Reihe der Polyolefine, der Polyacrylate, der Polymere der Vinylverbindungen mit oder ohne Weichmacher-Zusatz, oder aus elastischen Kunststoffen besteht oder wenigstens einen dieser Kunststoffe enthält.

7. Verfahren nach Anspruch 1, **dadurch gekennzeichnet, dass** die Schutzschicht aus einer Folie enthaltend Polyolefine oder Polyester und einer Klebstoffschicht besteht.

8. Verfahren nach Anspruch 1, **dadurch gekennzeichnet, dass** die Schutzschichten nach der Druck- und Hitzeeinwirkung in Form einer Folie wieder entfernt werden.

9. Verfahren nach Anspruch 1, **dadurch gekennzeichnet, dass** die Schutzschicht und insbesondere Schutzfolie in einer Bandpresse angewendet wird.

## Claims

1. Process for production of multi-layer laminates of at least three layers with sensitive outer surfaces as cover layers and a process for protecting the sensitive surfaces against mechanical and physical influences, in particular under the application of pressure and/or heat effects to achieve an inseparable connection and to form a laminate, where the sensitive surfaces are covered with a protective layer before or during the pressure and/or heat effect,
**characterised in that**
the protective layer is a plastic or resilient coating, melt-liquid under the effect of pressure and heat, of a thermoplastic or resilient plastic and at room temperature and without pressure application the protective layer takes the form of a plastic film which can be removed from the surface, and the protective layer in the form of a film is applied to the sensitive surface, and the rigidity modulus of the protective layer, determined in the torsion vibration test to DIN 53445 in which the temperature dependency of the rigidity modulus is determined and expressed in Pa x 10⁸, lies below an asymptotic curve Q which is **characterised by** the rigidity modulus points
A: 0.7 Pa x 10⁸ at 10°C
B: 0.5 Pa x 10⁸ at 30°C
C: 0.3 Pa x 10⁸ at 50°C
D: 0.1 Pa x 10⁸ at 100°C
falling asymptotically towards 0 at over 150°C, or the protective layer is made of an elastomer with a hardness of less than 60 Shore A at 100 to 250°C, and the protective layer has a lower dimensional stability than the surface to be protected.

2. Process according to claim 1, **characterised in that** the protective layer is applied to the sensitive surface by means of an adhesive layer or adhesion promotion agent.

3. Process according to any of claims 1 to 2, **characterised in that** the protective layer consists of an elastomer with hardness between 10 to 30 Shore A at 100 - 250°C.

4. Process according to claim 1, **characterised in that** at pressures of 1 to 50 bar and temperatures of 100 to 250°C the protective layer is melt-liquid, plastic or resilient.

5. Process according to claim 1, **characterised in that** the thickness of the protective layer is 10 µm to 250 µm.

6. Process according to claim 1, **characterised in that** the protective layer consists of a thermoplastic of the series of polyolefins, polyacrylates, polymers of vinyl compounds with or without softener additive, or resilient plastics, or contains at least one of these plastics.

7. Process according to claim 1, **characterised in that** the protective layer consists of a film containing polyolefins or polyester and an adhesive layer.

8. Process according to claim 1, **characterised in that** the protective layers are removed again in the form of a film after the heat and pressure effect.

9. Process according to claim 1, **characterised in that** the protective layer and in particular protective film are applied in a band press.

## Revendications

1. Procédé de production de composites multicouches constitués par au moins trois couches avec des surfaces externes sensibles comme couches de recouvrement et un procédé de protection pour les surfaces sensibles contre les influences mécaniques et physiques, en particulier lors de l'application de l'action de la pression et/ou de la chaleur pour la liaison fixe et pour la formation d'un composite, où les surfaces sensibles sont recouvertes d'une couche protectrice avant ou pendant l'action de la pression et/ou de la chaleur, **caractérisé en ce que** la couche protectrice est un revêtement liquide fondu, plastique ou élastique lors de l'action de la pression et de la chaleur constitué par une matière synthétique thermoplastique ou élastique, et la couche protectrice est sous forme d'une feuille de matière synthétique séparable de la surface à la température ambiante et sans application de pression, et la couche protectrice est appliquée sous forme d'une feuille sur la surface sensible, et le module de glissement de la couche protectrice, déterminé dans l'essai de mouvement de torsion-oscillation selon DIN 53445, dans lequel la dépendance à l'égard de la température du module de glissement est déterminée et exprimée en Pa x 10⁸, est situé sous une courbe asymptotique Q qui est **caractérisée par** les points de module de glissement
A : 0,7 Pa x 10⁸ à 10°C,
B : 0,5 Pa x 10⁸ à 30°C,
C : 0,3 Pa x 10⁸ à 50°C,
D : 0,1 Pa x 10⁸ à 100°C
et qui décroît asymptotiquement vers 0 à plus de 150°C, ou bien la couche protectrice est constituée par un élastomère d'une dureté inférieure à 60 Shore A à 100-250°C et la couche protectrice présente une plus faible stabilité dimensionnelle que la surface à protéger.

2. Procédé selon la revendication 1, **caractérisé en ce que** la couche protectrice est appliquée sur la surface sensible au moyen d'une couche d'adhésif ou d'un promoteur d'adhérence.

3. Procédé selon l'une des revendications 1 à 2, **caractérisé en ce que** la couche protectrice est constituée par un élastomère ayant une dureté située entre 10 et 30 Shore A à 100-250°C.

4. Procédé selon la revendication 1, **caractérisé en ce que** la couche protectrice est liquide fondue, plastique ou élastique à des pressions de 1 à 50 bars et à des températures de 100 à 250°C.

5. Procédé selon la revendication 1, **caractérisé en ce que** l'épaisseur de la couche protectrice est de 10 µm à 250 µm.

6. Procédé selon la revendication 1, **caractérisé en ce que** la couche protectrice consiste en une matière synthétique thermoplastique de la série des polyoléfines, des polyacrylates, des polymères des composés vinyliques avec ou sans addition de plastifiant, ou en matières synthétiques élastiques, ou contient au moins l'une de ces matières synthétiques.

7. Procédé selon la revendication 1, **caractérisé en ce que** la couche protectrice consiste en une feuille contenant des polyoléfines ou des polyesters et en une couche d'adhésif.

8. Procédé selon la revendication 1, **caractérisé en ce que** les couches protectrices sont retirées sous forme d'une feuille après l'action de la pression et de la chaleur.

9. Procédé selon la revendication 1, **caractérisé en ce que** la couche protectrice, et en particulier la feuille protectrice, est appliquée dans une presse à bandes.
